# Europäisches Patentamt

# European Patent Office

# Office européen des brevets

(19)

(11) Numéro de publication: **0 127 914**
**B1**

(12) **FASCICULE DE BREVET EUROPEEN**

(45) Date de publication du fascicule du brevet:
**19.11.87**

(21) Numéro de dépôt: **84200649.6**

(22) Date de dépôt: **08.05.84**

(51) Int. Cl.⁴: **G 02 B 23/14,** F 41 G 7/22,
B 64 D 47/08

(54) **Viseur panoramique sans rotation d'image à plusieurs champs.**

(30) Priorité: **11.05.83 FR 8307911**

(43) Date de publication de la demande:
**12.12.84 Bulletin 84/50**

(45) Mention de la délivrance du brevet:
**19.11.87 Bulletin 87/47**

(84) Etats contractants désignés:
**DE FR GB IT NL SE**

(56) Documents cités:
EP - A - 0 025 398
DE - A - 2 046 416
DE - B - 1 087 366
FR - A - 1 514 377
FR - A - 2 326 715
FR - A - 2 454 962
GB - A - 1 532 096
US - A - 2 009 816
US - A - 3 974 985

(73) Titulaire: **TELECOMMUNICATIONS
RADIOELECTRIQUES ET TELEPHONIQUES T.R.T.,
88, rue Brillat Savarin, F-75013 Paris (FR)**

(84) Etats contractants désignés: **FR**

(73) Titulaire: **N.V. Philips' Gloeilampenfabrieken,
Groenewoudseweg 1, NL-5621 BA Eindhoven (NL)**

(84) Etats contractants désignés: **DE GB IT NL SE**

(72) Inventeur: **Loy, Fernand, Sociète Civile S.P.I.D. 209 rue
de l'Université, FR-75007 Paris (FR)**

(74) Mandataire: **Chaffraix, Jean et ai, Société Civile
S.P.I.D. 209, rue de l'Université, F-75007 Paris (FR)**

ACTORUM AG

## Description

L'invention concerne un système optique à plusieurs champs monté dans une nacelle fixée sous un aéronef et dans lequel le déversement d'image est corrigé.

Un tel système est destiné à fournir à l'équipage une image du paysage sans déversement d'image quelle que soit la direction de la ligne de visée. Il est particulièrement adapté à la vision nocturne dans l'infra-rouge ou en intensification de lumière.

Ladite correction du déversement d'image est effectuée de façon connue en soi (voir par exemple le brevet français n° 2 326 715).

Un dispositif optique du même genre, monté sur un aéronef, est connu du brevet français N° 2 454 962. Ce dispositif comporte un nez susceptible de pivoter autour d'un axe horizontal et une pointe de nez susceptible de pivoter autour d'un axe transversal. L'ensemble complet optique-détecteur étant situé dans ladite pointe de nez, il ne peut se produire de déversement d'image.

Un autre dispositif de visée panoramique connu du brevet français N° 1 514 377 et comportant des moyens d'observation de l'espace balayé aussi bien en site qu'en gisement est aisément implantable dans des mobiles. Il s'agit d'une lunette de visée fonctionnant dans le visible où l'œil de l'observateur est le récepteur et dans lequel la variation de grossissement est obtenue par déplacement d'un véhicule optique.

L'invention vise à assurer l'orientation dans plus d'une demi-sphère de l'axe de visée d'un système optique produisant un déversement d'image que l'on corrige.

A cet effet et conformément à l'invention, ladite nacelle comporte une première partie fixée à l'aéronef, une deuxième partie orientable par rapport à ladite première partie autour d'un premier axe et contenant un récepteur précédé d'un transport d'images, une trosième partie orientable par rapport à ladite deuxième partie autour d'un axe orthogonal audit premier et contenant un objectif à plusieurs champs pour former l'image du paysage sur ledit récepteur, la combinaison desdits mouvements de rotation permettant d'orienter l'axe de visée dudit objectif dans plus d'une demi-sphère.

La description suivante en regard des dessins annexés, le tout donné à titre d'exemple, fera bien comprendre comment l'invention peut être réalisée.

La figure 1 est une représentation schématique en trois projections orthogonales du système conforme à l'invention.

Les figures 2a et 2b représentent respectivement en petit champ et en grand champ le schéma en perspective du système optique.

La figure 3 est une représentation schématique du système conforme à l'invention analogue à celle de la figure 1 mais avec une variante de réalisation du système optique.

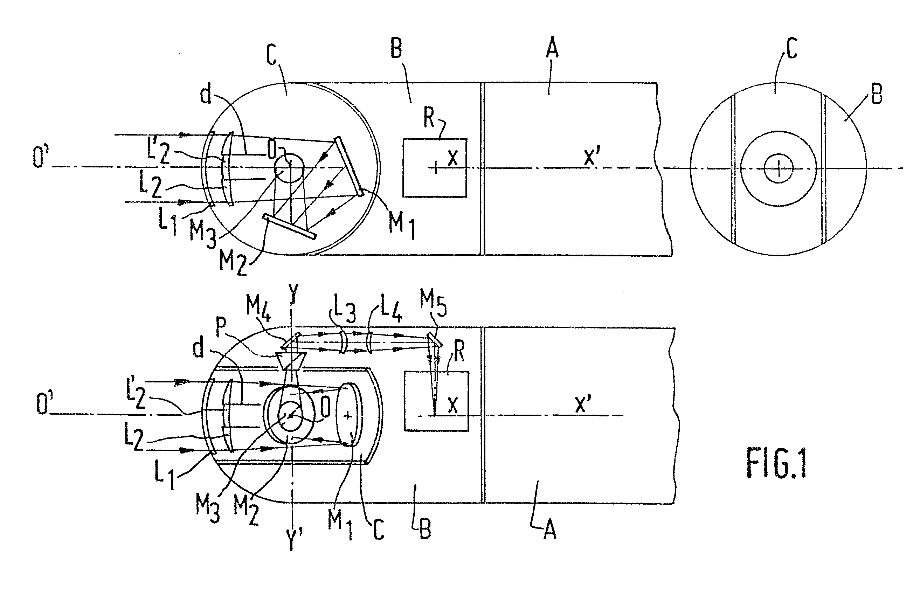

La figure 1 montre un schéma en trois projections orthogonales de la nacelle et de son contenu. La partie A de cette nacelle est fixée à l'aéronef non représenté.

Selon l'invention, la partie B est orientable par rapport à la partie A autour de l'axe XX' et la partie C est orientable par rapport à la partie B autour de l'axe YY' orthogonal à l'axe XX'. Un ensemble d'éléments optiques est renfermé dans les parties B et C de la nacelle. Cet ensemble comporte dans la partie C: un hublot $L_1$, un objectif de longue distance focale $L_2$ pour la visée en petit champ, un objectif de distance focale plus courte, $L_2'$ concentrique à $L_2$ pour la visée en grand champ, l'axe optique 00' de ces objectifs étant l'axe de visée. Le trajet optique de $L_2$ est replié par les miroirs $M_1$, $M_2$ et $M_3$ de façon à former l'image du paysage dans un plan situé à l'intérieur ou à proximité d'un prisme de Péchan P monté à rotation autour de l'axe YY' et situé dans la partie B de la nacelle. Le trajet optique de $L_2'$ est de même coudé par le miroir $M_3$ de manière à former l'image du paysage dans le même plan que l'image de $L_2$. A l'arrière du prisme de Péchan et dans la partie B de la nacelle, $L_3$ et $L_4$ sont les lentilles d'un transport d'image qui reprend l'image de $L_2$ ou de $L_2'$ pour la former sur le récepteur R. Les miroirs $M_4$ et $M_5$ disposés de part et d'autre de $L_3$ et $L_4$ ont pour rôle de replier les faisceaux.

On opère la sélection d'objectif en faisant tourner $M_3$ de 90° autour de l'axe YY'. $L_2'$ étant en pratique très proche de $M_3$, on peut facilement éviter que la lumière traversant $L_2$ ne vienne troubler l'image de $L_2'$ en réalisant un bafle d séparant $L_2$ de $L_2'$.

La motorisation de la partie B par rapport à la partie A est obtenue par un moteur solidaire de la partie A et non représenté.

La motorisation de la partie C par rapport à la partie B est obtenue par un moteur solidaire de la partie B et non représenté.

La motorisation du miroir $M_3$ par rapport à la partie C est obtenue par un moteur solidaire de la partie C et non représenté.

La motorisation du prisme P par rapport à la partie B est obtenue par un moteur solidaire de la partie B et non représenté.

Ces motorisations associées à des capteurs gyroscopiques sont en outre utilisées pour rendre la ligne de visée 00' fixe dans l'espace.

Le fonctionnement du système est le suivant. Lorsque la partie C tourne autour de YY', l'image de $L_2$ ou de $L_2'$ tourne par rapport à la partie B. On dit qu'il y a un déversement d'image sur le récepteur R. La rotation du prisme P autour de YY' permet de compenser ce déversement. Le prisme motorisé P est monté sur un palier solidaire de la partie B et son mouvement est asservi aux rotations autour de XX' et de YY' de telle façon que le déversement d'image soit toujours corrigé.

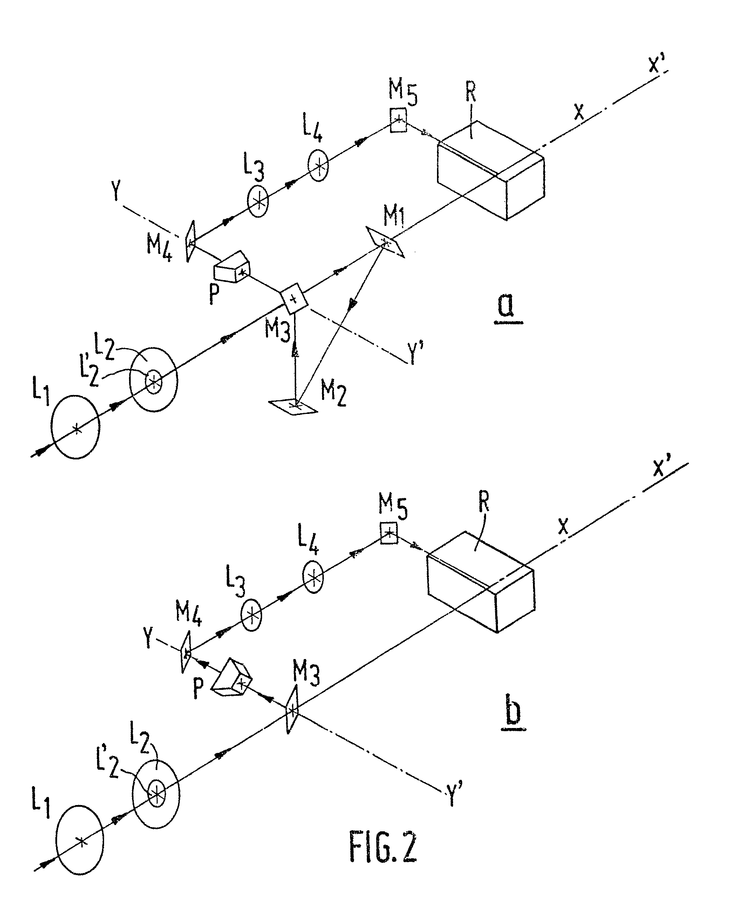

Les figures 2a et 2b représentent schématiquement des vues en perspective de l'ensemble d'éléments optiques décrit ci-dessus. La figure 2a se rapporte à une vue en petit champ et la figure 2b à une vue en grand champ. Les références des éléments optiques sont identiques à celles qui sont indiquées sur la figure 1. Les deux schémas mettent clairement en évidence le mode de repliement des faisceaux issus des objectifs concentriques $L_2$ et $L_2'$ au moyen de trois miroirs lorsqu'on utilise l'objectif à longue distance focale et au moyen d'un seul miroir lorsqu'on utilise l'objectif à courte distance focale. L'image est ainsi formée dans un même plan quel que soit l'objectif sélectionné. Les champs sont de l'ordre de 2° à 3° en petit champ et de 6° à 9° en grand champ avec une pupille d'entrée de l'ordre de 150 mm de diamètre en petit champ pour un diamètre extérieur de nacelle de 320 mm.

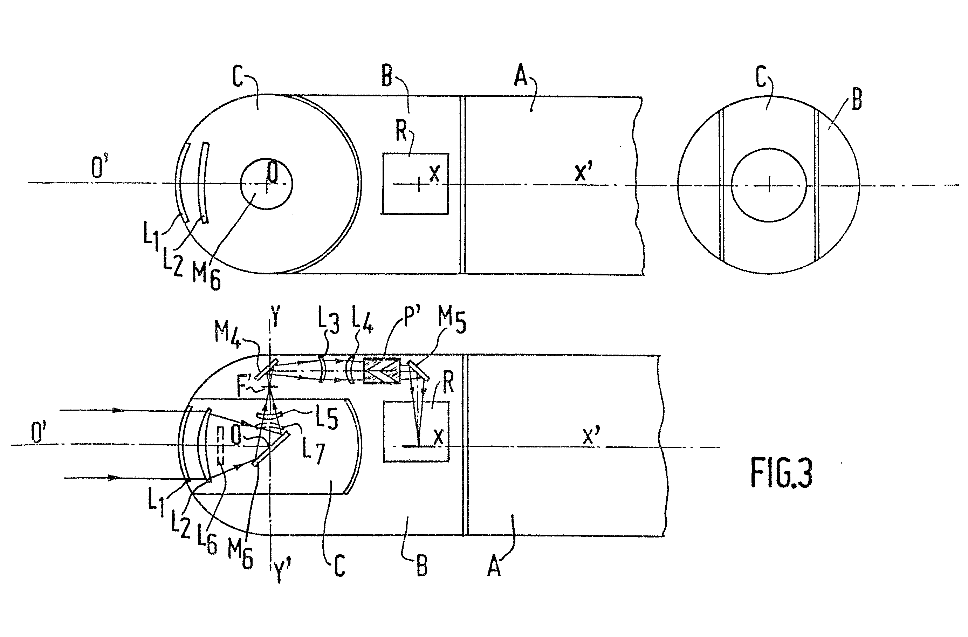

La figure 3 représente un schéma en trois projections orthogonales du système optique identique à celui de la figure 1 avec une variante de l'ensemble d'éléments optiques contenu dans les parties B et C de la nacelle. Sur cette figure, les éléments correspondant à ceux de la figure 1 sont munis des mêmes références.

Cette variante de l'ensemble d'éléments optiques comporte dans la partie C: un hublot $L_1$, un objectif à deux distances focales formé de deux jeux orthogonaux de lentilles $L_2L_6$ et $L_5L_7$ de sorte que le faisceau frappant le premier jeu suivant son axe optique (OO') est dévié par le miroir de renvoi $M_6$ vers le second jeu suivant la direction YY'. En courte focale pour la visée en grand champ, on utilise les quatre lentilles $L_2$, $L_5$, $L_6$ et $L_7$. En longue focale pour la visée en petit champ, les lentilles $L_2$ et $L_5$ sont seules utilisées. On change de focale par interposition des deux lentilles $L_6$ et $L_7$ qui doivent donc être escamotables (elles sont représentées en pointillés sur la figure). L'image du paysage formée au foyer F' de cet objectif est reprise dans la partie B de la nacelle par les deux lentilles de transport d'image $L_3$ et $L_4$ suivies d'un prisme de Räntsch P' mobile en rotation autour de leur axe optique. Deux miroirs de renvoi $M_4$ et $M_5$ disposés respectivement en amont des lentilles $L_3$ et $L_4$ et en aval du prisme P' permettent successivement la déviation du faisceau suivant l'axe optique des lentilles de transport d'image et la formation de l'image sur le récepteur R.

Le miroir de renvoi $M_6$ est fixé par rapport à C.

Les miroirs de renvoi $M_4$ et $M_5$ sont fixés par rapport à B.

Le fonctionnement du système avec la variante de l'ensemble d'éléments optiques décrite ci-dessus est analogue à celui déjà exposé. Le prisme de Räntsch corrige le déversement de l'image introduit par les mouvements de rotation autour des axes XX' et YY'. L'intérêt du prisme de Räntsch consiste en son trajet optique plus court que celui des autres types de prismes utilisables pour créer une dérotation.

Le récepteur R peut être soit une caméra photographique ou cinématographique, soit une caméra de télévision avec ou sans intensification de lumière, soit une caméra de thermographie sensible au rayonnement infra-rouge.

Dans le cas où le système fonctionne en infrarouge dans la bande de transmission atmosphérique comprise entre 8 μm et 12 μm, le hublot $L_1$ est de préférence en sulfure de zinc, les objectifs $L_2$, $L_2'$, $L_5$, $L_6$ et $L_7$ sont en germanium, le prisme de Péchan P et le prisme de Räntsch P' sont en séléniure de zinc, les lentilles $L_3$ et $L_4$ sont en germanium.

## Revendications

1. Système optique à plusieurs champs monté dans une nacelle fixée sous un aéronef et dans lequel le déversement d'image est corrigé, caractérisé en ce que ladite nacelle comporte une première partie (A) fixée à l'aéronef, une deuxième partie (B) orientable par rapport à ladite première partie autour d'un premier axe (XX') et contenant un récepteur (R) précédé d'un transport d'images ($M_4$, $L_3$, $L_4$, $M_5$), une troisième partie (C) orientable par rapport à ladite deuxième partie autour d'un axe (YY') orthogonal audit premier (XX') et contenant un objectif ($L_2$, $L_2'$; $L_2$, $L_5$, $L_6$, $L_7$) à plusieurs champs pour former l'image du paysage sur ledit récepteur, la combinaison desdits mouvements de rotation permettant d'orienter l'axe de visée dudit objectif dans plus d'une demi-sphère.

2. Système selon la revendication 1, caractérisé en ce que ledit objectif à plusieurs champs comporte dans ladite troisième partie (C), un hublot ($L_1$), deux objectifs concentriques, l'un ($L_2$) pour la visée en petit champ, l'autre ($L_2'$) pour la visée en grand champ, trois miroirs de renvoi ($M_1$, $M_2$, $M_3$) pour dévier les faisceaux issus desdits objectifs sur un prisme de Péchan (P) monté à rotation asservie autour dudit second axe (YY') sur un palier solidaire de ladite deuxième partie (B) dans laquelle sont disposées en amont dudit récepteur (R) deux lentilles ($L_3$, $L_4$) dudit ($M_4$, $M_5$) transport d'image situées entre deux autres miroirs de renvoi ($M_4$, $M_5$) et qui reprennent l'image de l'un ou l'autre desdits objectifs pour la former sur le récepteur.

3. Système selon la revendication 1, caractérisé en ce que ledit objectif à plusieurs champs comporte dans ladite troisième partie (C) un hublot ($L_1$), un objectif à deux distances focales formé de deux jeux orthogonaux de lentilles de sorte que le faisceau frappant le premier jeu ($L_2$, $L_6$) suivant son axe optique (OO') est dévié par un miroir de renvoi ($M_6$) vers le second jeu ($L_7$, $L_5$) suivant la direction dudit second axe (YY'), chacun desdits jeux étant constitué de deux lentilles dont l'une ($L_6$, $L_7$) est escamotable, l'image formée au foyer (F') dudit objectif étant reprise dans ladite deuxième partie (B) par deux lentilles dudit transport d'image suivies d'un prisme de Räntsch (P'), mobile en rotation autour de leur axe optique, deux autres miroirs de renvoi disposés l'un ($M_4$) en amont desdites lentilles de transport ($L_3$, $L_4$) l'autre ($M_5$) en aval dudit prisme (P') assurant successivement la déviation du faisceau suivant ledit axe optique et la formation de l'image sur le récepteur.

4. Système selon l'une des revendications 1 à 3, caractérisé en ce que ledit récepteur est une caméra photographique ou cinématographique, ou une caméra de télévision avec ou sans intensification de lumière, ou une caméra de thermographie.

5. Système selon les revendications 2 ou 3, caractérisé en ce que pour le fonctionnement dudit objectif à plusieurs champs dans le domaine de longueurs d'onde infra-rouge compris entre 8 µm et 12 µm ledit hublot ($L_1$) est de préférence en sulfure de zinc, lesdits objectis ($L_2$, $L_2'$; $L_5$, $L_6$, $L_7$) sont en germanium, lesdits prismes sont en séléniure de zinc et lesdites lentilles ($L_3$, $L_4$) dudit transport d'image sont en germanium, ledit récepteur étant une caméra de thermographie.

**Patentansprüche**

1. Optisches System mit mehreren Gesichtsfeldern, das in einer unter einem Luftfahrzeug befestigten Gondel angeordnet ist und in welchem die Bilddrehung korrigiert wird, dadurch gekennzeichnet, dass die Gondel einen am Luftfahrzeug befestigten ersten Teil (A), einen in bezug auf den ersten Teil um eine erste Achse (XX') drehbaren zweiten Teil (3) mit einem Empfänger (R), dem ein Bildübertragungssystem ($M_4$, $L_3$, $L_4$, $M_5$) vorgeschaltet ist, einen in bezug auf den zweiten Teil um eine zur ersten Achse (XX') orthogonale Achse (YY') drehbaren dritten Teil (C) mit einem Objektiv ($L_2$, $L_2'$; $L_2$, $L_5$, $L_6$, $L_7$) mit mehreren Gesichtsfeldern zum Formen eines Bildes der Landschaft auf diesen Empfänger enthält, wobei die Kombination dieser Drehbewegungen das Richten der Visierachse des Objektivs in mehr als einer Halbkugel ermöglicht.

2. System nach Anspruch 1, dadurch gekennzeichnet, dass das Objektiv mit mehreren Gesichtsfeldern im dritten Teil (C) ein Sichtfenster ($L_1$), zwei konzentrische Objektive, eines ($L_2$) für das Schmalsichtfeld und das andere ($L_2'$) für das Weitsichtfeld und drei Umlenkspiegel ($M_1$, $M_2$, $M_3$) zum Ablenken der aus den Objektiven tretenden Strahlen nach einem Pechan-Prisma (P) enthält, das drehbar um die zweite Achse, YY') auf einem auf dem zweiten Teil (3) befestigten Lager angeordnet ist, wobei in diesem zweiten Teil vor dem Empfänger (R) zwei Linsen ($L_3$, $L_4$) der Bildübertragungsanordnung zwischen zwei anderen Umlenkspiegeln ($M_4$, $M_5$) angeordnet sind, welche Linsen das Bild des einen oder des anderen der Objektive auf dem Empfänger herabbilden.

3. System nach Anspruch 1, dadurch gekennzeichnet, dass das Objektiv mit mehreren Gesichtsfeldern im dritten Teil (C) ein Sichtfeldfenster ($L_1$) und ein Objektiv mit zwei Fokusabständen enthält, die durch zwei orthogonale Linsensätze gebildet werden, derart, dass der den ersten Satz ($L_2$, $L_6$) erreichende Strahl entsprechend der optischen Achse (0, 0') dieses Satzes durch einen Umlenkspiegel ($M_6$) zum zweiten Satz ($L_7$, $L_5$) entsprechend der Richtung der zweiten Achse (YY') abgelenkt wird, wobei jeder der beiden Sätze aus zwei Linsen ($L_6$, $L_7$) besteht, von denen eine einschiebbar ist, wobei das im Brennpunkt (F') des Objektivs geformte Bild im zweiten Teil (B) durch zwei Linsen der Bildübertragungsanordnung eingefangen wird, denen ein bewegliches Räntsch-Prisma (P') folgt, das um die optische Achse der zwei Linsen drehbar ist, wobei zwei andere Umlenkspiegel, von denen einer ($M_4$) vor den Übertragungslinsen ($L_3$, $L_4$) und der andere ($M_5$) hinter dem erwähnten Prisma (P') angeordnet sind, nacheinander die Strahlablenkung entlang der erwähnten optischen Achse und das Formen des Bildes auf den Empfänger gewährleisten.

4. System nach einem der Ansprüche 1 bis 3, dadurch gekennzeichnet, dass der Empfänger eine Photokamera oder Filmkamera, oder auch eine Fernsehkamera mit oder ohne Lichtverstärker, oder eine thermographische Kamera ist.

5. System nach Anspruch 2 oder 3, dadurch gekennzeichnet, dass für die Wirkung des Objektivs mit mehreren Gesichtsfeldern im infraroten Wellenlängenbereich zwischen 8 und 12 µm das Sichtfeldfenster ($L_1$) vorzugsweise aus Zinkschwefel, die Objektive ($L_2$, $L_2'$; $L_5$, $L_6$, $L_7$) aus Germanium, die Prismen aus Zinkselen und die Linsen ($L_3$, $L_4$) der erwähnten Bildübertragungsanordnung aus Germanium bestehen und der genannte Empfänger eine thermographische Kamera ist.

**Claims**

1. A multi-field optical system mounted in a nacelle fixed under an aircraft, which system provides correction for image tilt, characterized in that said nacelle comprises a first portion (A) fixed to the aircraft, a second portion (B) which is rotatable relative said first portion about a first axis (XX') and which comprises a receiver (R) proceded by an imaging system ($M_4$, $L_3$, $L_4$, $M_5$), a third portion (C) which is rotatable relative to said second portion about an axis (YY') orthoganal to said first axis (XX') and which comprises a multi-field objective ($L_2$, $L_2'$; $L_2$, $L_5$, $L_6$, $L_7$) to form the image of the scene on said receiver, the combination of said rotary movements enabling the axis of sight of said objective to be positioned over more than one hemisphere.

2. A system as claimed in Claim 1, characterized in that said multi-field objective in said third portion (C) comprises a porthole ($L_1$), two concentric objectives, one ($L_2$) for narrow-angle view, the other ($L_2'$) for wide-angle view, three folding mirrors ($M_1$, $M_2$, $M_3$) for deflecting the beams emerging from said objectives to a Péchan prism (P) arranged for controlled rotation about said second axis (YY') on a bearing which is fixed to said second portions (B) in which upstream of said receiver (R) two lenses ($L_3$, $L_4$) of said imaging system are arranged between two further folding mirrors ($M_4$, $M_5$) and receive the image from either the one or the other of said objectives to re-image it on the receiver.

3. A system as claimed in Claim 1, characterized in that said multi-field objective in said third portion (C) comprises a port-hole ($L_1$), an objective having two focal lengths and formed by two orthogonal sets of lenses in such manner that the beam which is incident on the first set ($L_2$, $L_6$) along its optical axis (00') is deflected by a folding mirror ($M_6$) towards the second set ($L_7$, $L_5$) along the direction of said second axis (YY') each of said sets comprising two lenses, one ($L_6$, $L_7$) of which is retractable, the image formed in the focal plane (F') of said objective being captured in said second portion (B) by two lenses of said imaging system followed by a Räntsch prism (P') which is rotatable about their optical axis, two further folding mirrors being arranged one ($M_4$) upstream of said imaging lenses ($L_3$, $L_4$) and the other ($M_5$) downstream of said prism ($P_1$) successively to deflect the beam along said optical axis and to form the image on the receiver.

4. A system as claimed in any one of the Claims 1 to 3, characterized in that said receiver is a photographic or cine camera, of a television camera with or without light intensification, or a thermographic camera.

5. A system as claimed in Claim 2 or 3, characterized in that for the operation of said multi-field objective in the infra-red range of wavelengths between 8 μm and 12 μm said port-hole ($L_1$) is preferably made of zinc-sulphide, said objectives ($L_2$, $L_2'$; $L_5$, $L_6$, $L_7$) are made of germanium, said prisms are made of zinc-selevide, and said lenses ($L_3$, $L_4$) of said imaging system are made of germanium, said receiver being a thermographic camera.

FIG.1

FIG.2

FIG.3